# EUROPEAN PATENT APPLICATION

(11) **EP 3 404 982 A1**
(43) Date of publication of application: **21.11.2018**
(21) Application number: 18166022.6
(22) Date of filing: 17.12.2009
(51) Int. Cl.: H04W 72/04, H04L 5/00, H04L 5/14

(54) **CARRIER AGGREGATION METHOD IN A FREQUENCY DIVISION DUPLEX SYSTEM AND DEVICE THEREOF, AND METHOD FOR OBTAINING UPLINK/DOWNLINK CHANNEL RECIPROCITY AND DEVICE THEREOF**

(30) Priority: 17.12.2008 CN 200810241622; 26.02.2009 CN 200910004683
(62) Divisional of application: 09832941.0
(71) Applicant: Huawei Technologies Co., Ltd., Longgang District Shenzhen Guangdong 518129 (CN)
(72) Inventor: SUN, Lixin, Shenzhen, Guangdong 518129 (CN); LV, Yongxia, Shenzhen, Guangdong 518129 (CN); WAN, Lei, Shenzhen, Guangdong 518129 (CN)
(74) Representative: Isarpatent

(57) **Abstract**

A method for obtaining uplink/downlink channel reciprocity and a device thereof are provided. The method includes: selecting at least one downlink carrier from N carriers; and bearing at least one sounding reference symbol (SRS) on the downlink carrier. The N carriers include paired carriers and unpaired carriers, or all the N carriers are unpaired carriers. A carrier aggregation method in a frequency division duplex (FDD) system and a device thereof are provided, which may obtain uplink/downlink channel reciprocity in the FDD system.

## Description

This application claims priority to Chinese Patent Application No. 200810241622.8, filed with Chinese Patent Office on December 17, 2008 and entitled "CARRIER AGGREGATION METHOD IN A FREQUENCY DIVISION DUPLEX SYSTEM AND DEVICE THEREOF" and Chinese Patent Application No. 200910004683.7, filed with Chinese Patent Office on February 26, 2009 and entitled "CARRIER AGGREGATION METHOD IN A FREQUENCY DIVISION DUPLEX SYSTEM AND DEVICE THEREOF", which are incorporated herein by reference in their entireties.

### FIELD OF THE INVENTION

The present invention relates to the field of wireless communications, and in particular, to a carrier aggregation method in a frequency division duplex (FDD) system and a device thereof, and a method for obtaining uplink/downlink channel reciprocity and a device thereof.

### BACKGROUND OF THE INVENTION

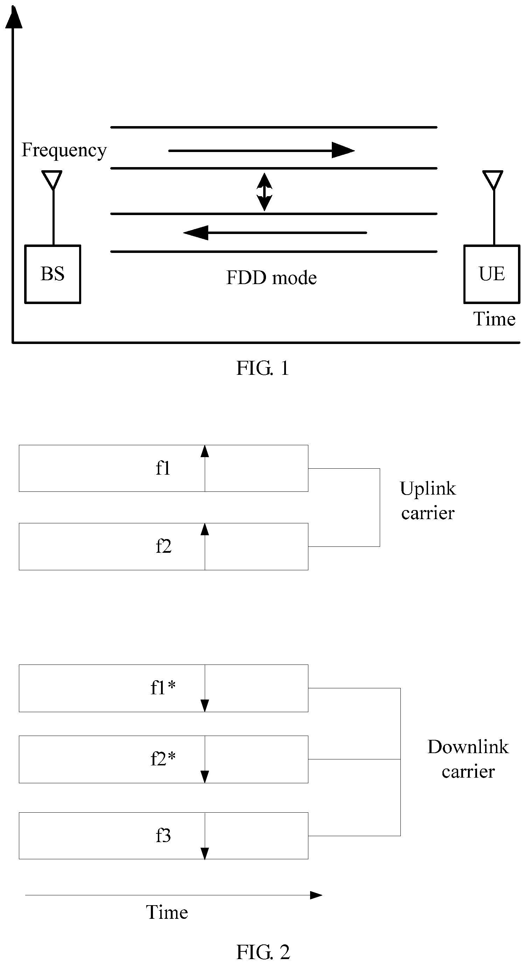

Communication is generally bi-directional, and bi-directional communication may be realized in two ways, that is, FDD and time division duplex (TDD). The FDD mode is shown in FIG. 1, the bi-directional communication involving receiving and transferring is realized on two separated paired frequency channels, and a protection frequency band is used for separating receiving and transferring channels. An arrow direction from a base station (BS) to terminal equipment such as a user equipment (UE) represents a downlink channel direction, and an arrow direction from the UE to the BS represents an uplink channel direction. A downlink channel from the BS to the UE adopts a carrier f1, and an uplink channel from the UE to the BS adopts another carrier f2 paired with f1, and enough protection frequency bands are reserved between f1 and f2.

During frequency spectrum division, paired carrier frequency bands refer to that a downlink carrier frequency band always corresponds to only one uplink carrier frequency band, so that a pair of frequency spectrums with paired uplink/downlink carriers is formed. Only such paired frequency spectrums can be adopted for FDD. For carrier aggregation, multiple carriers with continuous frequency spectrums may be aggregated, and also carriers with discontinuous frequency spectrums may be aggregated. Carriers to be aggregated may have same or different bandwidth, for example, aggregation of 5 MHz + 10 MHz is possible. The specific carrier aggregation also depends on terminal capabilities, service requirements, and network configuration. For example, for N downlink carriers and M uplink carriers configured in a network, according to different terminal capabilities, a terminal with a high capability may use the N downlink carriers and M uplink carriers; and a terminal with a low capability may use a part of the N downlink carriers only, and may only transmit data on a part or one of the M uplink carriers.

Carrier aggregation in an existing FDD mode is shown in FIG. 2, in which f1 and f1* are paired carriers, f2 and f2* are paired carriers, and f3 is an unpaired carrier. In a carrier aggregation solution, f1 and f2 are aggregated into an uplink carrier for uplink transmission, and f1*, f2*, and f3 are aggregated into a downlink carrier for downlink transmission. However, according to the carrier aggregation solution in the existing FDD mode, one carrier bears either the downlink transmission or the uplink transmission, so that the uplink/downlink channel reciprocity of a carrier cannot be obtained.

### SUMMARY OF THE INVENTION

In one aspect, an embodiment of the present invention provides a method for obtaining uplink/downlink channel reciprocity. The method includes: configuring at least one downlink carrier in N carriers as a first carrier; and bearing at least one sounding reference symbol (SRS) on the first carrier, in which the N carriers include paired carriers and unpaired carriers, or the N carriers only include unpaired carriers.

Accordingly, in another aspect, an embodiment of the present invention provides a device for obtaining uplink/downlink channel reciprocity, where the device includes: a selection unit, adapted to select at least one downlink carrier from N carriers; and a bearing unit, adapted to bear at least one SRS on the downlink carrier, in which the N carriers include paired carriers and unpaired carriers, or the N carriers only include unpaired carriers.

Compared with the prior art, the method for obtaining uplink/downlink channel reciprocity and the device thereof according to the present invention have the main difference and the effect in that, in the technical solution of the present invention, the at least one downlink carrier in the N carriers is configured to bear the uplink signal SRS, so that the uplink/downlink channel reciprocity of a carrier can be obtained in an FDD system.

In another aspect, an embodiment of the present invention provides a carrier aggregation method in an FDD system, which is used to obtain uplink/downlink channel reciprocity of a carrier in the FDD system. In the method, at least one radio frame of at least one of N carriers is configured to include a downlink time slot, an uplink time slot, and a guard period (GP), in which the GP is located between the downlink time slot and the uplink time slot, and the at least one carrier is referred to as a first carrier. When the first carrier is configured as an uplink channel, the first carrier and an uplink carrier in the N carriers are aggregated into an uplink carrier; alternatively, when the first carrier is configured as a downlink channel, the first carrier and a downlink carrier in the N carriers are aggregated into a downlink carrier. The N carriers include paired carriers and unpaired carriers, or only include unpaired carriers. The first carrier is set as a downlink carrier in the unpaired carriers and/or the paired carriers.

In anther aspect, an embodiment of the present invention provides a carrier aggregation device in an FDD system, which is adapted to obtain uplink/downlink channel reciprocity of a carrier in the FDD system, where the device includes:
a configuration unit, adapted to configure at least one radio frame of at least one of N carriers to include a downlink time slot, an uplink time slot, and a GP, in which the GP is located between the downlink time slot and the uplink time slot; the N carriers include paired carriers and unpaired carriers, or only include unpaired carriers, the at least one carrier is a downlink carrier of the unpaired carriers and/or the paired carriers, and the at least one carrier is referred to as a first carrier; and
an aggregation unit, adapted to aggregate the first carrier and an uplink carrier in the N carriers into an uplink carrier when the first carrier is configured as an uplink channel; or adapted to aggregate the first carrier and a downlink carrier in the N carriers into a downlink carrier when the first carrier is configured as a downlink channel.

Compared with the prior art, the method for obtaining uplink/downlink channel reciprocity and the device thereof according to the present invention have the main difference and the effect in that at least one radio frame of the first carrier is configured to include a downlink time slot, an uplink time slot, and a GP, in which the GP is located between the downlink time slot and the uplink time slot, and according to uplink/downlink requirements, the first carrier is configured to be aggregated with an uplink carrier or a downlink carrier, so that the uplink/downlink channel reciprocity of a carrier can be obtained in the FDD system.

### BRIEF DESCRIPTION OF THE DRAWINGS

FIG. 1 is a schematic structural diagram of bi-directional communication in an FDD mode in the prior art;
FIG. 2 is a schematic structural diagram of carrier aggregation in the FDD mode in the prior art;
FIG. 3 is a schematic diagram of a carrier aggregation method in an FDD system according to a first embodiment of the present invention;
FIG. 4 is a schematic diagram of a carrier aggregation method in an FDD system according to a second embodiment of the present invention;
FIG. 5 is a schematic diagram of a frame structure ratio of a radio frame according to the second embodiment of the present invention;
FIG. 6 is a schematic diagram of a carrier aggregation method in an FDD system according to a third embodiment of the present invention;
FIG. 7 is a schematic structural diagram of configuration of a downlink normal sub-frame and a special sub-frame in a radio frame according to a fourth embodiment of the present invention;
FIG. 8 is a schematic structural diagram of configuration of a downlink time slot, a GP, and an uplink time slot in a radio frame according to a fifth embodiment of the present invention;
FIG. 9 is a schematic structural diagram of configuration of a downlink time slot, a GP, and an uplink time slot in a radio frame according to a sixth embodiment of the present invention;
FIG. 10 is a schematic structural diagram of a carrier aggregation device in an FDD system according to a seventh embodiment of the present invention;
FIG. 11 is a schematic diagram of a method for obtaining uplink/downlink channel reciprocity according to an eighth embodiment of the present invention;
FIG. 12 is a schematic diagram of implementation of a method for obtaining uplink/downlink channel reciprocity according to a ninth embodiment of the present invention;
FIG. 13 is a schematic diagram of a method for obtaining uplink/downlink channel reciprocity during carrier aggregation according to a tenth embodiment of the present invention; and
FIG. 14 is a schematic structural diagram of a device for obtaining uplink/downlink channel reciprocity according to an eleventh embodiment of the present invention.

### DETAILED DESCRIPTION OF THE EMBODIMENTS

To make the objectives, technical solutions, and advantages of the present invention more comprehensible, the embodiments of the present invention are described in further detail in the following with reference to the accompanying drawings.

If parameters/impulse responses of uplink/downlink channels are substantially the same, the characteristic that a result estimated by one party is directly utilized by the other party in uplink/downlink receiving and sending is referred to as uplink/downlink channel reciprocity. The beam forming (BF) technology is to form a specific beam pattern through an adaptive BF algorithm, so as to obtain a high antenna gain in a desired user direction and a very low gain or even no gain (zero) in an interference direction.

After a mobile communication BS adopts the BF technology, the performance is improved as follows.
(1) The signal to interference-and-noise ratio (SINR) is increased, and the sensitivity of a BS receiver is increased, so that a bit error rate and an outage probability of the system are reduced, and in a condition without considering multipath propagation, a total signal-to-noise ratio of a receiving channel is increased by 10*lgK, in which K is the number of antenna units.
(2) An equivalent transmission power of a BS transmitter is increased.
(3) A system capacity is increased.
(4) The coverage of a cell is improved, and a coverage distance is increased, so that the capacity of users at an edge of the cell may be effectively increased.

The BF technology needs to know the propagation characteristic of the transmission channel, and in the prior art, the FDD system has to use a complex closed loop solution, and the closed loop manner requires the user to feed back the channel quality of the downlink channel through an uplink control channel, so that the overhead of control signaling of the FDD system is increased.

By using technical solutions according to embodiments of the preset invention, the uplink/downlink channel reciprocity may be obtained in the FDD system, so that the BF may be realized in an open loop manner, and the overhead of the control signaling and the loss of the BF performance may be reduced.

In a carrier aggregation method in an FDD system according to an embodiment of the present invention, a radio frame of at least one of N carriers is set to include a downlink time slot, an uplink time slot, and a GP; and according to the requirement of uplink/downlink services, the carrier and an uplink carrier in the N carriers are aggregated to bear uplink transmission, or the carrier and a downlink carrier in the N carriers are aggregated to bear downlink transmission. The GP may be located between the downlink time slot and the uplink time slot. For example, all or a random part of the radio frame of the carrier may be configured to include a downlink time slot, an uplink time slot, and a GP. The N carriers include paired carriers and an unpaired carrier, or the N carriers may only include unpaired carriers.

It should be noted that, to facilitate subsequent description and reference, the at least one carrier may be referred to as, for example, a first carrier. Furthermore, the uplink time slot in the radio frame of the carrier may be used for bearing an uplink signal, for example, SRS. The specific frame structure of the radio frame may refer to the relevant description in the following embodiments.

It can be seen that, in the solution according to the foregoing embodiment of the present invention, the radio frame of the first carrier is set to include an uplink time slot, a downlink time slot, and a GP located between the uplink time slot and the downlink time slot, and according to requirements of uplink/downlink services, the first carrier is used for being aggregated with the uplink carrier or the downlink carrier, so as to obtain the uplink/downlink channel reciprocity of a carrier in the FDD system, so that the BF may be realized in the open loop manner, and the overhead of the control signaling and the loss of the BF performance are reduced.

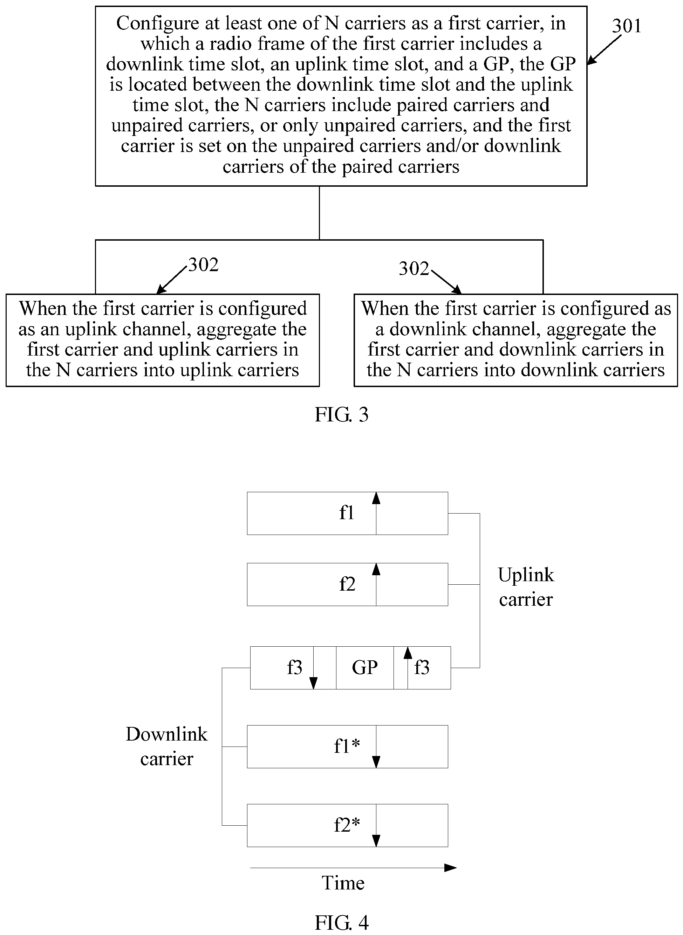

FIG. 3 is a schematic diagram of a carrier aggregation method in an FDD system according to an embodiment of the present invention. As shown in FIG. 3, the method includes the following steps.

Step 301: Configure or refer to at least one of N carriers as a first carrier, and configure at least one radio frame of the first carrier to include a downlink time slot, an uplink time slot, and a GP, in which the GP is located between the downlink time slot and the uplink time slot. The uplink time slot is used for sending SRS. Step 302: When the first carrier is configured as an uplink channel, aggregate the first carrier and uplink carriers in the N carriers into uplink carriers; alternatively, when the first carrier is configured as a downlink channel, aggregate the first carrier and downlink carriers in the N carriers into downlink carriers.

The N carriers in step 301 include paired carriers and an unpaired carrier, or the N carriers only include an unpaired carrier. The first carrier may be set on the unpaired carriers and/or the downlink carriers of paired carriers. In other words, the paired carriers in the N carriers or the downlink carrier in the paired carriers in the N carriers may be used as the first carrier.

The uplink time slot in step 301 includes an uplink normal sub-frame and/or an uplink special sub-frame; and the downlink time slot includes a downlink normal sub-frame and/or a downlink special sub-frame.

The radio frame including the downlink time slot, the uplink time slot, and the GP is specifically that, the radio frame includes a downlink normal sub-frame and at least one special sub-frame; alternatively, the radio frame includes a downlink normal sub-frame, an uplink normal sub-frame, and at least one special sub-frame; alternatively, the radio frame includes an uplink normal sub-frame and at least one special sub-frame.

The uplink pilot time slot (UpPTS) in the special sub-frame is used for sending the SRS.

The radio frame including the downlink normal sub-frame, the uplink normal sub-frame, and the at least one special sub-frame may specifically include that, in a 5ms sub-frame, the ratio of the downlink normal sub-frame, the special sub-frame, and the uplink normal sub-frame is 1:1:3 or 2:1:2 or 3:1:1; in a 10ms sub-frame, the ratio of the downlink normal sub-frame, the special sub-frame, and the uplink normal sub-frame is 6:1:3 or 7:1:2 or 8:1:1 or 3:2:5.

Similar to the foregoing embodiment, the specific frame structure described in this embodiment is applicable to all or a part (one or more) of radio frames of the first carrier.

In the first embodiment of the present invention, the frame structure of the radio frame of the first carrier is set to include a downlink time slot, an uplink time slot, and a GP, in which the GP is located between the downlink time slot and the uplink time slot, and according to uplink/downlink requirements, the first carrier is configured to be aggregated with uplink carriers or downlink carriers (that is, the carrier and other uplink carriers are aggregated into uplink carriers for uplink transmission, alternatively the carrier and other downlink carriers are aggregated into downlink carriers for downlink transmission), so as to obtain the uplink/downlink channel reciprocity of a carrier in the FDD system, so that BF is realized in an open loop manner, and the overhead of the control signaling and the loss of the BF performance are reduced.

FIG. 4 is a schematic diagram of a carrier aggregation solution in an FDD system according to a second embodiment of the present invention. In the embodiment, two pair of paired carriers and one unpaired carrier are taken as an example, in which f1 and f1* are paired carriers, f2 and f2* are paired carriers, and f3 is an unpaired carrier. The carrier aggregation solution may be that: when f3 is configured as an uplink channel, f1, f2, and f3 are aggregated into an uplink carrier for uplink transmission, f1* and f2* are aggregated into a downlink carrier for downlink transmission; and when f3 is configured as a downlink channel, f1 and f2 are aggregated into an uplink carrier for uplink transmission, f1*, f2*, and f3 are aggregated into a downlink carrier for downlink transmission. A radio frame in the unpaired member carrier f3 includes a downlink time slot, an uplink time slot, and a GP, in which the GP is located between the downlink time slot and the uplink time slot.

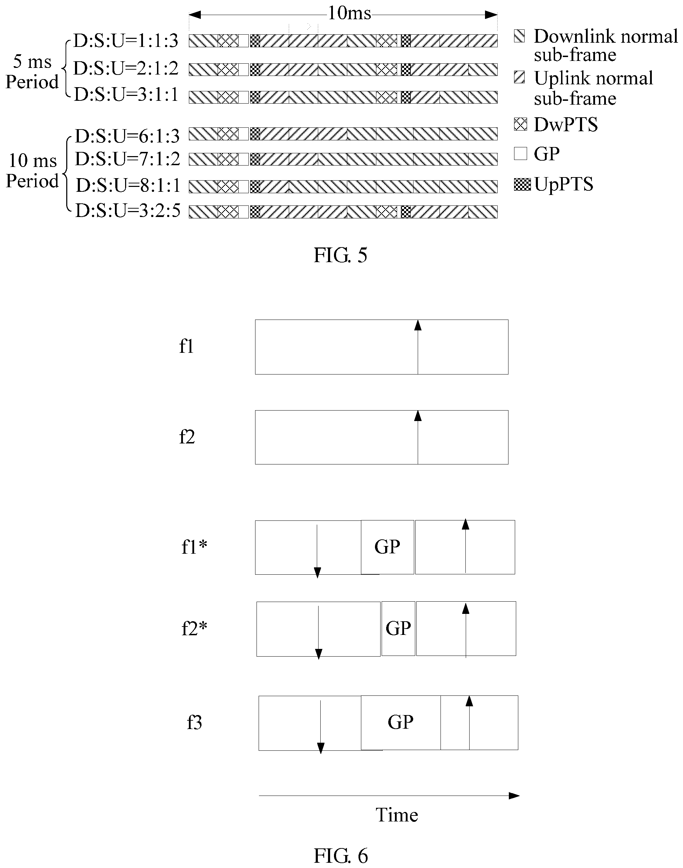

In this embodiment, the GP is located in a special sub-frame. The frame structure ratio of the downlink normal sub-frame, the special sub-frame, and the uplink normal sub-frame is shown in Table 1. In a half frame, that is, 5ms, three ratios exist, and in a radio frame, that is, 10ms, four ratios exist; and the specific frame structure ratio is shown in FIG. 5, in which D represents the downlink normal sub-frame, S represents the special sub-frame, and U represents the uplink normal sub-frame.

**Table 1**

| Configuration Option | Downlink-to-Uplink Switch-point Periodicity | Sub-frame number | | | | | | | | | |
|---|---|---|---|---|---|---|---|---|---|---|---|
| | | 0 | 1 | 2 | 3 | 4 | 5 | 6 | 7 | 8 | 9 |
| 0 | 5ms | D | S | U | U | U | D | S | U | U | U |
| 1 | 5ms | D | S | U | U | D | D | S | U | U | D |
| 2 | 5ms | D | S | U | D | D | D | S | U | D | D |
| 3 | 10ms | D | S | U | U | U | D | D | D | D | D |
| 4 | 10ms | D | S | U | U | D | D | D | D | D | D |
| 5 | 10ms | D | S | U | D | D | D | D | D | D | D |
| 6 | 10ms | D | S | U | U | U | D | S | U | U | D |

The special sub-frame is formed of three types of specific time slots, which are respectively: an UpPTS, a GP, and a downlink pilot time slot (DwPTS). The uplink special sub-frame may refer to an uplink part in the special sub-frame, for example, may include the UpPTS in the special sub-frame. Likewise, the downlink special sub-frame may refer to a downlink part in the special sub-frame, for example, may include the DwPTS in the special sub-frame. Various configuration of lengths of the three specific time slots, that is, DwPTS, GP, and UpPTS is shown in Table 2.

**Table 2**

| Configuration Option | Normal CP | | | Extended CP | | |
|---|---|---|---|---|---|---|
| | DwPTS | GP | UpPTS | DwPTS | GP | UpPTS |
| 0 | 3 | 10 | 1 | 3 | 8 | 1 |
| 1 | 9 | 4 | 1 | 8 | 3 | 1 |
| 2 | 10 | 3 | 1 | 9 | 2 | 1 |
| 3 | 11 | 2 | 1 | 10 | 1 | 1 |
| 4 | 12 | 1 | 1 | 3 | 7 | 2 |
| 5 | 3 | 9 | 2 | 8 | 2 | 2 |
| 6 | 9 | 3 | 2 | 9 | 1 | 2 |
| 7 | 10 | 2 | 2 | | | |
| 8 | 11 | 1 | 2 | | | |

It can be seen from Table 2 that, the length of the DwPTS is 3 to 12 Orthogonal Frequency-Division Multiplexing (OFDM) symbols, and the length of the UpPTS is 1 to 2 OFDM symbols. A default state of the UpPTS is that a UE sends an uplink SRS, and a BS may obtain an impulse response of an uplink channel by using the SRS; the UpPTS may also bear a physical random access channel (PRACH). In practice, the DwPTS is a type of downlink channel, and the UpPTS is a type of uplink channel. After the UE with a limited radio frequency transmission capability sends the SRS on the uplink time slot of the unpaired member carrier (for example, the carrier f3 in the embodiment), subsequently the UE is unable to send an uplink signal on other uplink member carriers, and instead a transmission/receiver switching time is required, in which the switching time may be realized through that the BS does not schedule a subsequent uplink normal sub-frame for the UE. Furthermore, in this embodiment, the sub-frame is 1ms, but the present invention is not limited to 1ms.

Different configuration of a duration of the uplink time slot, the downlink time slot, and the GP may be notified to a user through a broadcast message. Therefore, the foregoing frame structure is used for configuring the uplink normal sub-frame, the downlink normal sub-frame, and the special sub-frame, and in the aggregation solution, the unpaired member carrier may be used for both the downlink transmission and the uplink transmission, so the uplink channel of the unpaired member carrier may be used for obtaining the impulse response of the downlink channel, so as to obtain the uplink/downlink channel reciprocity, so that the BF technology may be realized in the open loop manner.

Furthermore, the second embodiment of the present invention is illustrated merely with two pairs of paired carriers and one unpaired carrier as an example. However, it can be understood that, the carriers in the carrier aggregation solution of the present invention may have multiple combinations, for example, two pairs of paired carriers and two unpaired carriers, f1 and f1* are paired carriers, f2 and f2* are paired carriers, and f3 and f4 are both unpaired carriers, and the carrier aggregation solution may be that: f1, f2, and f3 are aggregated into an uplink carrier for uplink transmission; f1*, f2*, and f4 are aggregated into a downlink carrier for downlink transmission. That is, the radio frame structure of at least one of the unpaired carriers f3 and f4 is configured in the foregoing manner, so as to obtain the uplink/downlink channel reciprocity, and by using the uplink/downlink channel reciprocity, the BF technology may be realized in the open loop manner, and the overhead of the control signaling and the loss of the BF performance may be reduced. Definitely, in a carrier aggregation solution, multiple pairs of paired carriers may exist, and multiple unpaired carriers may also exist.

If the uplink carrier f1 in the paired carriers is configured to have both a downlink time slot and an uplink time slot, as in the downlink, the BS performs sending and the UE performs receiving and the transmission power of the BS is much higher than that of the UE, such configuration of the downlink time slot causes great interference on adjacent frequencies of f1, so in an exemplary embodiment of the present invention, the frequency spectrum is divided into member carriers of the downlink carrier, and the uplink carrier f1 is re-configured to have both a downlink time slot and an uplink time slot. During frequency spectrum division, the unpaired member carrier may be configured to have both a downlink time slot and an uplink time slot, but it is also possible that the uplink carrier is configured to have both a downlink time slot and an uplink time slot. The manner for configuring the member carrier of the downlink carrier of the paired carriers to have both the downlink time slot and the uplink time slot may refer to relevant description in the following third embodiment.

FIG. 6 is a schematic diagram of a carrier aggregation method in an FDD system according to the third embodiment of the present invention. In the embodiment, still two pairs of paired carriers and one unpaired carrier are taken as an example, in which f1 and f1* are paired carriers, f2 and f2* are paired carriers, and f3 is an unpaired carrier. Different from the second embodiment, downlink carriers f1*, f2*, and f3 are configured to have both a downlink time slot and an uplink time slot, in which the downlink time slot is used for downlink transmission and the uplink time slot is used for uplink transmission. The uplink/downlink time slots and GPs of f1*, f2*, and f3 may have the same duration or may have different durations. The specific duration is notified to a terminal UE through a broadcast message. The frame structure ratio of the downlink normal sub-frame, the special sub-frame, and the uplink normal sub-frame in the downlink carriers f1*, f2*, and f3 may be various ratios in the second embodiment, which is not described herein anymore.

As described in the foregoing, in this embodiment, the uplink normal sub-frame, the downlink normal sub-frame, and the special sub-frame are configured through the foregoing frame structure, and the unpaired member carrier (for example, the carrier f3) in the aggregation solution may be used for both downlink transmission and uplink transmission, so that an uplink channel of the unpaired member carrier may be used to obtain an impulse responses of a downlink channel, and the uplink/downlink channel reciprocity may also be used, so the BF technology may be realized in the open loop manner, and the overhead of the control signaling and the loss of the BF performance are reduced.

The carriers in the second eEmbodiments 2 and 3the third embodiment of the present invention are configured in the mannerform of the uplink normal sub-frames, the special sub-frames, and the downlink normal sub-frames, and in a fourth embodimentEmbodiment 4 of the present invention, the carriers are configured in the form manner of the downlink normal sub-frames and the special sub-frames. As shown in 7, different from the radio frame configuration of the unpaired carrier f3 in the Embodiment 2 second embodiment and the carriers f1*, f2*, and f3 in Embodiment 3the third embodiment, in a 10-msms radio frame, only one special sub-frame exists, and the other sub-frames are downlink normal sub-frames. The special sub-frame is formed of the a DwPTS, a GP, and a UpPTS, and a specific size of each a special time slot may be a size corresponding to the various configurations in Table 2. The UpPTS is an uplink time slot, and both the downlink normal sub-frame and the DwPTS are downlink time slot. In this the embodiment, the time slot is not limited to 1 ms, and may be smaller than or greater than 1 ms. Furthermore, the UpPTS is used for the UE to send an uplink SRS such thatso that the BS can may use the SRS to obtain the impulse response of the uplink channel, and can may use the uplink/downlink channel reciprocity, so the BF technology can may be realized in an the open loop mannermode easily. The UpPTS does not bear the uplink data of the UE, and if the UE has uplink data to be sentd, the uplink data is mainly sent in the uplink member carrier of the paired carriers. The DwPTS bears a Primary Synchronization Signal (PSS), a Physical Downlink Control Channel (PDCCH), and a Physical Downlink Shared Channel (PDSCH). Furthermore, the size of the uplink time slot introduced on the downlink member carrier is 1 to 2 symbols, so a limited number of SRS users can may be serviced, and not all the users can may send the SRS on the uplink time slot SRS, for example, boundary users that need to use the BF technology are serviced preferentially.

In the fourth embodiment of the present invention, the downlink normal sub-frame and the special sub-frame are set on the unpaired member carrier or the downlink carrier of the paired carriers, so that the uplink channels of the unpaired member carrier or the downlink carrier of the paired carriers may be used to obtain the impulse response of the downlink channel, so as to obtain the uplink/downlink channel reciprocity. In such a manner, the uplink/downlink channel reciprocity may be utilized, the BF technology may be realized in the open loop manner, and the overhead of the control signaling and the loss of the BF performance are reduced. Furthermore, although this embodiment only takes 10ms as an example, it should be understood that, the present invention is not limited to 10ms, for example, 5ms is also applicable to the embodiments of the present invention, which is not described herein anymore.

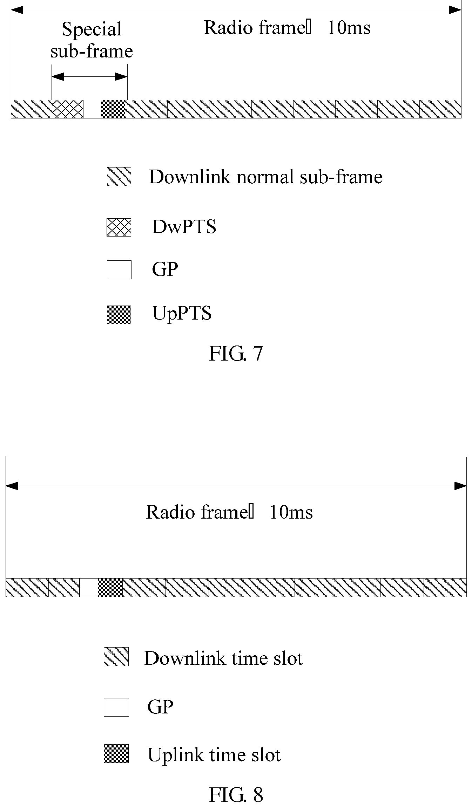

In the second embodiment and the third embodiment of the present invention, the carriers are configured in the form of the uplink normal sub-frame, the special sub-frame, and the downlink normal sub-frame, and in a fifth embodiment of the present invention, the carriers are configured in the form of the downlink time slot, the GP, and the uplink time slot. As shown in FIG. 8, different from the radio frame configuration of the unpaired carrier f3 in the second embodiment and the carriers f1*, f2*, and f3 in the third embodiment, the 10ms radio frame is formed of a downlink time slot, a GP, and an uplink time slot, and the size of the uplink time slot is 1 to 2 symbols, and the uplink time slot may be only used for the UE to send an uplink SRS.. The BS may use the SRS to obtain the impulse response of the uplink channel, so that the uplink/downlink channel reciprocity may be used, and the BF technology may be realized in the open loop manner. The member carrier does not bear the uplink data of the UE, and if the UE has uplink data to be sent, the uplink data is mainly sent in the uplink member carrier of the paired carriers. In the embodiment, the time slot is defined to be, but not limited to, 1ms, and may be smaller than or greater than 1ms. Furthermore, a size of the uplink time slot introduced on the downlink member carrier is 1 to 2 symbols, so that a limited number of SRS users may be serviced, and not all the users may send the SRS on the uplink time slot.

Therefore, in the embodiment of the present invention, the uplink normal sub-frame, the special sub-frame, and the downlink normal sub-frame are set on the unpaired member carrier or the downlink carrier of the paired carriers, so that the uplink channel of the unpaired member carrier or the downlink carrier of the paired carriers may be used to obtain the impulse response of the downlink channel, so as to obtain the uplink/downlink channel reciprocity, so the uplink/downlink channel reciprocity may be utilized, the BF technology may be realized in the open loop manner, and the overhead of the control signaling and the loss of the BF performance are reduced.

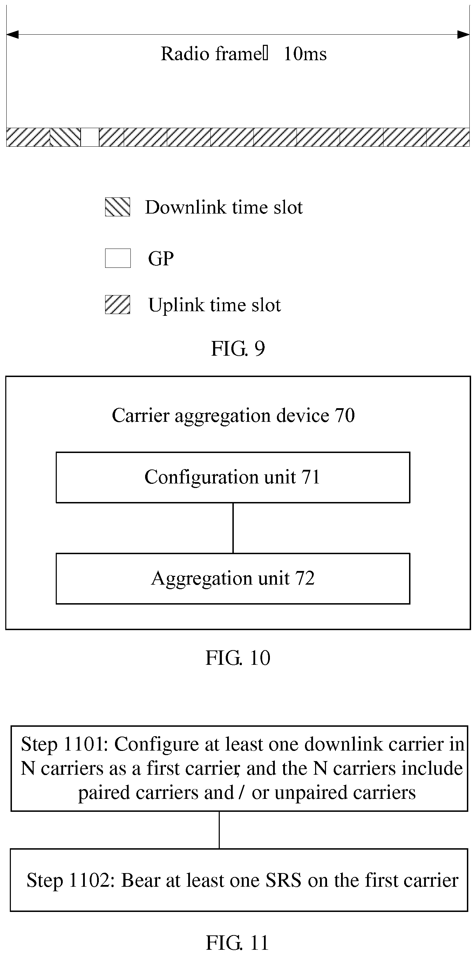

In a solution according to a sixth embodiment of the present invention, similar to the fifth embodiment, the carriers are also configured in the form of the downlink time slot, the GP, the uplink time slot. As shown in FIG. 9, in the embodiment, a 10ms radio frame is formed of a downlink time slot, a GP, and an uplink time slot, in which the uplink time slot is used is used for the UE to send an uplink SRS In such a manner, a BS may use the SRS to obtain an impulse response of an uplink channel, and a signal is sent on the downlink time slot in a BF manner. In the solution of the present invention, a time slot is defined to be, but not limited to, 1ms, and may be smaller than or greater than 1ms. By using the solution according to the embodiment, the uplink/downlink channel reciprocity may be used, the BF technology may be easily realized in the open loop manner, and the overhead of the control signaling and the loss of the BF performance are reduced.

Accordingly, an embodiment of the present invention provides a carrier aggregation device in an FDD system, and the device may realize the carrier aggregation in the FDD system according to the steps described in the foregoing method embodiments, so as to obtain the uplink/downlink channel reciprocity, so the obtained uplink/downlink channel reciprocity may be used, the BF may be realized in the open loop manner, and the overhead of the control signaling and the loss of the BF performance caused by the existing closed loop manner may be reduced. In the following, further description is provided with reference to the accompanying drawings and specific embodiments.

A seventh embodiment of the present invention provides a carrier aggregation device in an FDD system, and as shown in FIG. 10, a carrier aggregation device 70 includes:
a configuration unit 71, adapted to configure a radio frame of at least one of N carriers (which is referred to as a first carrier for ease of subsequent description) to include a downlink time slot, an uplink time slot, and a GP, in which the GP is located between the downlink time slot and the uplink time slot; and
an aggregation unit 72, adapted to aggregate the first carrier and an uplink carrier in the N carriers into an uplink carrier when the first carrier is configured as an uplink channel; or adapted to aggregate the first carrier and a downlink carrier in the N carriers into a downlink carrier when the first carrier is configured as a downlink channel.

The N carriers include paired carriers and an unpaired carrier, or only include an unpaired carrier. The first carrier is set on the downlink carriers of the unpaired carriers and/or the paired carriers, that is to say, the unpaired carrier and/or the downlink carrier of the paired carriers are configured as the first carriers.

The uplink time slot in the configuration unit 71 includes an uplink normal sub-frame and/or an uplink special sub-frame; and the downlink time slot includes a downlink normal sub-frame and/or a downlink special sub-frame.

The radio frame including the downlink time slot, the uplink time slot, and the GPs is specifically that, the radio frame includes the downlink normal sub-frame and at least one special sub-frame; or the radio frame includes the downlink normal sub-frame, the uplink normal sub-frame, and the at least one special sub-frame; or the radio frame includes the uplink normal sub-frame and the at least one special sub-frame.

A UpPTS in the special sub-frame is used for sending an SRS. Alternatively, the uplink time slot in the radio frame is used for sending an SRS.

The radio frame including the downlink normal sub-frame, the uplink normal sub-frame, and the at least one special sub-frame specifically includes that, in a 5ms sub-frame, the ratio of the downlink normal sub-frame, the special sub-frame, and the uplink normal sub-frame is 1:1:3 or 2:1:2 or 3:1:1; alternatively, in a 10ms sub-frame, the ratio of the downlink normal sub-frame, the special sub-frame, and the uplink normal sub-frame is 6:1:3 or 7:1:2 or 8:1:1 or 3:2:5. Furthermore, the specific configuration of the radio frame is described in the second embodiment and the sixth embodiment, which is no longer described herein.

In the seventh embodiment of the present invention, the radio frame of the first carrier is set to include the downlink time slot, the uplink time slot, and the GP, in which the GP is located between the downlink time slot and the uplink time slot, and according to uplink/downlink requirements, the first carrier is configured to be aggregated with an uplink carrier or a downlink carrier, so that the uplink/downlink channel reciprocity of a carrier may be obtained in the FDD system. In such a manner, the BF may be realized in the open loop manner, and the overhead of the control signaling and the loss of the BF performance are reduced.

In a wireless communication system, to improve the performance of downlink transmission of boundary users of a cell, downlink Coordinated Multi-Point transmission (CoMP) in the CoMP technology may be used, that is, multiple cells transmit signals to a same terminal in cooperation, so as to enhance the SINR of a signal received by the terminal or improve the throughput of system transmission.

The downlink CoMP technology requires that a BS knows channel information of a downlink channel, and in the prior art, as FDD uplink/downlink frequency bands are different, a downlink signal is only sent on a downlink carrier, and an uplink signal is only sent on an uplink carrier, for example, in the FDD system, the SRS may only be sent on the uplink carrier, and the BS cannot obtain the channel information of the downlink carrier according to the measurement of an SRS of a conventional uplink frequency band. In such a manner, effective downlink channel information cannot be obtained through the SRS on the uplink carrier, so the uplink/downlink channel reciprocity cannot be obtained, and the gain of the downlink CoMP technology cannot be effectively obtained.

Furthermore, the existing advanced multi-antenna technologies (such as the downlink CoMP technology and the BF technology) require that the BS knows the complete channel information of the downlink carrier. In the existing FDD system, only the quantized and encoded channel information of the downlink carrier can be fed back through the uplink control channel of the uplink carrier; however, the overhead of the control signaling generated by using the solution is excessively large, and the performance loss also occurs in the downlink CoMP. Furthermore, a large loss occurs in the system performance obtained by the BS based on the channel information of the downlink carrier fed back by the uplink control channel compared with the system performance of obtaining the complete channel information of the downlink carrier.

Accordingly, an embodiment of the present invention provides a solution for obtaining uplink/downlink channel reciprocity further. In the solution, an uplink signal such as an SRS is borne on a downlink carrier, so as to obtain downlink channel information, so that the uplink/downlink channel reciprocity of the downlink carrier can be effectively obtained. For example, a BS may obtain the downlink channel information by measuring the uplink signal SRS sent by the downlink carrier, so that complete and accurate downlink channel information is easily obtained with a limited overhead, and the advanced multi-antenna technology such as CoMP and BF technologies can be effectively used; moreover, the occupied overhead of the uplink frequency band is significantly decreased, which facilitates to mitigate the problem of imbalanced uplink/downlink in the existing FDD system.

In the following, the solution for obtaining the uplink/downlink channel reciprocity according to the present invention is further described with reference to accompanying drawings and specific embodiments.

An embodiment of the present invention provides a method for obtaining uplink/downlink channel reciprocity. In the method, several downlink carriers (for example, one or more) are selected from N carriers, at least one SRS is borne on the selected downlink carrier. The N carriers may include paired carriers and unpaired carriers, or the N carriers may all be unpaired carriers. The paired carriers are, for example, the paired carriers f1 and f1*, and f2 and f2* in the second embodiments to the seventh embodiment; and the unpaired carriers are, for example, carriers f3 and f4 in the foregoing embodiments. Furthermore, for ease of description and reference, the downlink carriers for bearing an uplink signal (SRS) are collectively referred to as first carriers, which are the same in the following embodiments herein.

It can be seen that, in the foregoing embodiments of the present invention, the uplink signal (the SRS signal in this embodiment) is borne on a downlink carrier, that is, the uplink signal SRS is sent through the downlink carrier, so that a BS may obtain channel information of the downlink carrier by measuring the uplink signal SRS sent on the downlink carrier, so as to obtain downlink channel information through information of an uplink channel, so the uplink/downlink channel reciprocity of the downlink carrier may be effectively obtained.

As shown in FIG. 11, an embodiment of the present invention provides a method for obtaining uplink/downlink channel reciprocity of a downlink carrier. The method includes the following steps. Step 1101: Configure at least one downlink carrier in N carriers as a first carrier. Step 1102: Bear at least one SRS on the first carrier.

In step 1101, the N carriers include paired carriers and/or unpaired carriers. That is to say, the N carriers may include paired carriers and unpaired carriers, or the N carriers may all be unpaired carriers. The paired carriers are, for example, the paired carriers f1 and f1*, and f2 and f2* in the second embodiment to the seventh embodiment, and the unpaired carriers are, for example, the carriers f3 and f4 in the foregoing embodiments. A radio frame of the first carrier in step 1101 includes at least one GP; or a downlink normal sub-frame and at least one special sub-frame; or a downlink normal sub-frame, an uplink normal sub-frame, and at least one special sub-frame; or an uplink normal sub-frame and at least one special sub-frame; or a downlink time slot, a GP, and an uplink time slot.

The radio frame including the downlink normal sub-frame, the uplink normal sub-frame, and the at least one special sub-frame specifically includes that, in a 5ms sub-frame, the ratio of the downlink normal sub-frame, the special sub-frame, and the uplink normal sub-frame is 1:1:3 or 2:1:2 or 3:1:1; alternatively, in a 10ms sub-frame, the ratio of the downlink normal sub-frame, the special sub-frame, and the uplink normal sub-frame is 6:1:3 or 7:1:2 or 8:1:1 or 3:2:5. That is to say, if the radio frame of the downlink carrier adopts the frame structure of the downlink normal sub-frame, the uplink normal sub-frame, and the at least one special sub-frame, various ratio relations among the uplink normal sub-frame, the downlink normal sub-frame, and the special sub-frame may exist. The SRS in step 1102 is borne on the uplink time slot or the uplink special sub-frame of the radio frame.

Definitely, a radio frame of the first carrier may also include at least one downlink normal sub-frame. The SRS in step 1102 is borne on the downlink normal sub-frame. The downlink normal sub-frame may be a multicast broadcast single frequency network (MBSFN) sub-frame.

In the foregoing embodiments of the present invention, the at least one downlink carrier in the N carriers is configured to bear an uplink signal (SRS), so as to obtain the uplink/downlink channel reciprocity of a carrier in an FDD system. That is, the uplink signal SRS is borne on the downlink carrier (referred to as the first carrier in this embodiment) for sending, so a BS receives the uplink SRS to obtain uplink channel information, and as frequency points are same, downlink channel information may be obtained, so that the uplink/downlink channel reciprocity of a carrier can be obtained in the FDD system.

The GP is introduced before the downlink carrier bears the SRS. The GP may be introduced or not after the SRS.

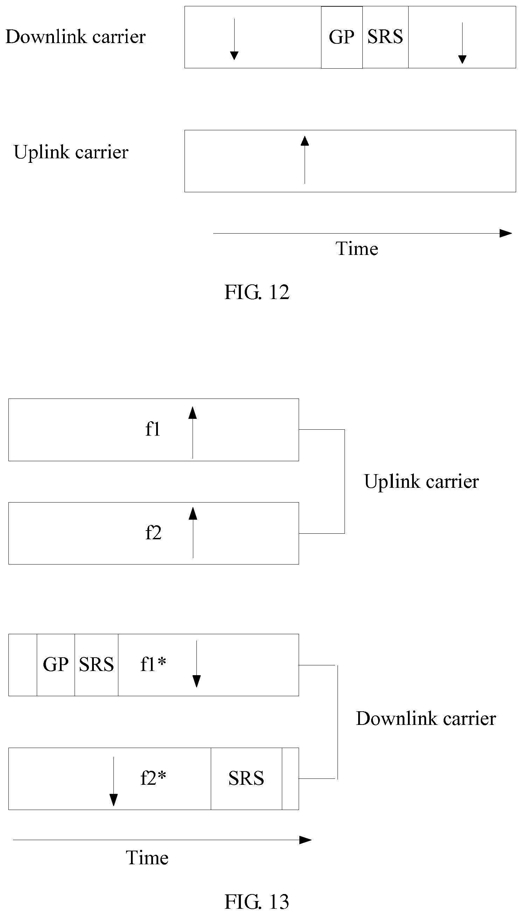

As show in FIG. 12, in a method for obtaining uplink/downlink channel reciprocity of a downlink carrier according to a ninth embodiment of the present invention, a user sends an uplink SRS on the downlink carrier, an impulse response of an uplink channel of the downlink carrier may be obtained through the SRS sent by the user on the downlink carrier, as on the same frequency, an impulse response of the downlink channel of the downlink carrier may be obtained by using the uplink/downlink channel reciprocity of the downlink carrier, so that the BF may be realized in the open loop manner, and the downlink CoMP technology may also be realized easily. The radio frame of the downlink carrier may adopt the frame structure in the first embodiment, the second embodiment, the third embodiment, the fourth embodiment, the fifth embodiment, the sixth embodiment, and the seventh embodiment of the present invention, and the SRS is sent on the corresponding uplink time slot or uplink normal sub-frame or uplink special sub-frame; alternatively, if the radio frame on the downlink carrier adopts a normal FDD frame structure, the SRS and/or GP are borne on the MBSFN sub-frame in the normal FDD frame structure, or the SRS and/or GP are borne on the downlink normal sub-frame. Definitely, the radio frame of the downlink carrier may also adopt other frame structures.

As shown in FIG. 13, in a tenth embodiment of the present invention, in a paired carrier aggregation solution of an FDD system, a user sends an uplink SRS on multiple downlink carriers in the FDD system, and impulse responses of uplink channels of the downlink carriers may be obtained through the SRS sent by the user on the downlink carriers, so as to obtain impulse responses of downlink channels of the downlink carriers by using the uplink/downlink channel reciprocity of the downlink carriers, so the BF may be easily realized, and the downlink CoMP technology may also be easily realized. A radio frame on the downlink carriers may adopt the frame structures in the first embodiment, the second embodiment, the third embodiment, the fourth embodiment, the fifth embodiment, the sixth embodiment, and the seventh embodiment of the present invention, and the SRS is sent on the corresponding uplink time slot or uplink normal sub-frame or uplink special sub-frame; alternatively, if the radio frame on the downlink carrier adopts the normal FDD frame structure, and the SRS and/or GP are borne on the MBSFN sub-frame in the FDD frame structure, or the SRS and/or GP are borne on the downlink normal sub-frame. Definitely, the radio frame of the downlink carrier may also adopt other frame structures.

Specifically, multiple SRSs and/or GPs may exist, and frequency division may be performed on an SRS sent by different users on the same symbol. Different users may send the SRS on different symbols, and the same user may also send the SRS on multiple symbols.

Accordingly, an embodiment of the present invention provides a device for obtaining uplink/downlink channel reciprocity, and the device may obtain the uplink/downlink channel reciprocity according to the steps described in the embodiments in the foregoing methods for obtaining the uplink/downlink channel reciprocity. By using the obtained uplink/downlink channel reciprocity, the BF may be realized in the open loop manner, and the overhead of the control signaling and the loss of the BF performance caused by the existing closed loop manner may be reduced. In the following, further description is provided with reference to accompanying drawings and specific embodiments.

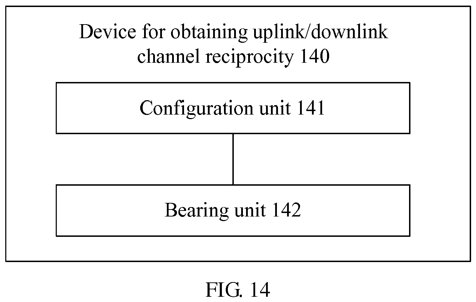

An eleventh embodiment of the present invention provides a device for obtaining uplink/downlink channel reciprocity, as shown in FIG. 14. A device for obtaining uplink/downlink channel reciprocity 140 includes:
a configuration unit 141, adapted to configure at least one downlink carrier in N carriers as a first carrier, in which the N carriers include paired carriers and/or unpaired carriers,
that is to say, the at least one downlink carrier is selected from the N carriers to serve as the first carrier; and
a bearing unit 142, adapted to bear at least one SRS on the first carrier.

A radio frame of the first carrier in the configuration unit 141 includes:
at least one GP; or a downlink normal sub-frame and at least one special sub-frame; or a downlink normal sub-frame, an uplink normal sub-frame, and at least one special sub-frame; or an uplink normal sub-frame and at least one special sub-frame; or a downlink time slot, a GP, and an uplink time slot.

The SRS in the bearing unit 142 is borne on the at least one uplink time slot, uplink normal sub-frame, or uplink special sub-frame.

A radio frame of the first carrier in the configuration unit 141 only includes at least one downlink normal sub-frame.

The SRS in the bearing unit 142 is borne on the at least one downlink normal sub-frame. The at least one downlink normal sub-frame is an MBSFN sub-frame.

Further embodiments of the present invention are provided in the following. It should be noted that the numbering used in the following section does not necessarily need to comply with the numbering used in the previous sections.

Embodiment 1. A method for obtaining uplink/downlink channel reciprocity, comprising:
selecting at least one downlink carrier from N carriers; and
bearing at least one sounding reference symbol, SRS, on the downlink carrier,
wherein the N carriers comprise paired carriers and unpaired carriers, or all the N carriers are unpaired carriers.

Embodiment 2. The method for obtaining uplink/downlink channel reciprocity according to embodiment 1, wherein at least one radio frame of a first carrier comprises:
at least one guard period, GP; or
a downlink normal sub-frame and at least one special sub-frame; or
a downlink normal sub-frame, an uplink normal sub-frame, and at least one special sub-frame; or
an uplink normal sub-frame and at least one special sub-frame; or
a downlink time slot, a GP, and an uplink time slot, wherein the downlink time slot comprises a downlink normal sub-frame and/or a downlink special sub-frame, and the downlink time slot comprises an uplink normal sub-frame and/or an uplink special sub-frame.

Embodiment 3. The method for obtaining uplink/downlink channel reciprocity according to embodiment 2, wherein the radio frame comprising the downlink normal sub-frame, the uplink normal sub-frame, and the at least one special sub-frame specifically comprises that,
in a 5ms sub-frame, a ratio of the downlink normal sub-frame, the special sub-frame, and the uplink normal sub-frame is 1:1:3 or 2:1:2 or 3:1:1; or
in a 10ms sub-frame, a ratio of the downlink normal sub-frame, the special sub-frame, and the uplink normal sub-frame is 6:1:3 or 7:1:2 or 8:1:1 or 3:2:5.

Embodiment 4. The method for obtaining uplink/downlink channel reciprocity according to embodiment 1, wherein at least one radio frame of the downlink carrier comprises at least one downlink normal sub-frame, and the SRS is borne on the at least one downlink normal sub-frame.

Embodiment 5. The method for obtaining uplink/downlink channel reciprocity according to embodiment 4, wherein the at least one downlink normal sub-frame is a multicast broadcast single frequency network, MBSFN, sub-frame.

Embodiment 6. A device for obtaining uplink/downlink channel reciprocity, comprising:
a selection unit, adapted to select at least one downlink carrier from N carriers; and
a bearing unit, adapted to bear at least one sounding reference symbol, SRS, on the downlink carrier,
wherein the N carriers comprise paired carriers and unpaired carriers, or the N carriers only comprise unpaired carriers.

Embodiment 7. The device for obtaining uplink/downlink channel reciprocity according to embodiment 6, wherein at least one radio frame of the downlink carrier comprises:
at least one guard period, GP; or
a downlink normal sub-frame and at least one special sub-frame; or
a downlink normal sub-frame, an uplink normal sub-frame, and at least one special sub-frame; or
an uplink normal sub-frame and at least one special sub-frame; or
a downlink time slot, a GP, and an uplink time slot, wherein the downlink time slots comprise downlink normal sub-frames and/or downlink special sub-frames, and the downlink time slots comprises uplink normal sub-frames and/or uplink special sub-frames.

Embodiment 8. The device for obtaining uplink/downlink channel reciprocity according to embodiment 6, wherein at least one radio frame of the downlink carrier comprises at least one downlink normal sub-frame, and the SRS is borne on the at least one downlink normal sub-frame.

Embodiment 9. The device for obtaining uplink/downlink channel reciprocity according to embodiment 8, wherein the at least one downlink normal sub-frame is a multicast broadcast single frequency network MBSFN, sub-frame.

Embodiment 10. A carrier aggregation method in a frequency division duplex, FDD, system, comprising:
configuring at least one radio frame of at least one of N carriers to comprise a downlink time slot, an uplink time slot, and a guard period, GP), wherein the GP is located between the downlink time slot and the uplink time slot, and the at least one carrier is referred to as a first carrier;
aggregating the first carrier and an uplink carrier in the N carriers into an uplink carrier when the first carrier is configured as an uplink channel; or
aggregating the first carrier and a downlink carrier in the N carriers into a downlink carrier when the first carrier is configured as a downlink channel,
wherein the N carriers comprise paired carriers and unpaired carriers, or the N carriers only comprise unpaired carriers, and the first carrier is a downlink carrier in the unpaired carriers and/or the paired carriers.

Embodiment 11. The carrier aggregation method according to embodiment 10, wherein the uplink time slot comprises an uplink normal sub-frame and/or an uplink special sub-frame; and the downlink time slot comprises a downlink normal sub-frame and/or a downlink special sub-frame.

Embodiment 12. The carrier aggregation method according to any one of embodiments 10 and 11, wherein the radio frame comprising the downlink time slot, the uplink time slot, and the GP is specifically that:
the radio frame comprises a downlink normal sub-frame and at least one special sub-frame; or
the radio frame comprises a downlink normal sub-frame, an uplink normal sub-frame, and at least one special sub-frame; or
the radio frame comprises an uplink normal sub-frame and at least one special sub-frame. Embodiment 13. The carrier aggregation method according to embodiment 12, wherein an uplink pilot time slot , UpPTS, in the special sub-frame is used to send a sounding reference symbol SRS,.

Embodiment 14. The carrier aggregation method according to any one of embodiments 10 and 11, wherein the uplink time slot in the radio frame is used to send a sounding reference symbol (SRS).

Embodiment 15. The carrier aggregation method according to embodiment 12, wherein the radio frame comprising the downlink normal sub-frame, the uplink normal sub-frame, and the at least one special sub-frame specifically comprises that:
in a 5ms sub-frame, a ratio of the downlink normal sub-frame, the special sub-frame, and the uplink normal sub-frame is 1:1:3 or 2:1:2 or 3:1:1; or
in a 10ms sub-frame, a ratio of the downlink normal sub-frame, the special sub-frame, and the uplink normal sub-frame is 6:1:3 or 7:1:2 or 8:1:1 or 3:2:5.

Embodiment 16. A carrier aggregation device in a frequency division duplex, FDD, system, comprising:
a configuration unit, adapted to configure at least one radio frame of at least one of N carriers to comprise a downlink time slot, an uplink time slot, and a guard period, GP, wherein the GP is located between the downlink time slot and the uplink time slot, and the at least one carrier is referred to as a first carrier; and
an aggregation unit, adapted to aggregate the first carrier and an uplink carrier in the N carriers into an uplink carrier when the first carrier is configured as an uplink channel; or adapted to aggregate the first carrier and a downlink carrier in the N carriers into a downlink carrier when the first carrier is configured as a downlink channel,
wherein the N carriers comprise paired carriers and unpaired carriers, or only comprise unpaired carriers, and the first carrier is selected from a downlink carrier of the unpaired carriers and/or the paired carriers.

Embodiment 17. The carrier aggregation device according to embodiment 16, wherein the uplink time slot comprises an uplink normal sub-frame and/or an uplink special sub-frame; and the downlink time slot comprises a downlink normal sub-frame and/or a downlink special sub-frame.

Embodiment 18. The carrier aggregation device according to any one of embodiments 16 and Embodiment 17, wherein the radio frame comprising the downlink time slot, the uplink time slot, and the GP is specifically that:
the radio frame comprises a downlink normal sub-frame and at least one special sub-frame;
the radio frame comprises a downlink normal sub-frame, an uplink normal sub-frame, and at least one special sub-frame; or
the radio frame comprises an uplink normal sub-frame and at least one special sub-frame. Embodiment 19. The carrier aggregation device according to embodiment 18, wherein an uplink pilot time slot (UpPTS) in the special sub-frame is used to send a sounding reference symbol (SRS).

Embodiment 20. The carrier aggregation device according to embodiment 16, 17 or 18, wherein the uplink time slot in the radio frame is used to send an SRS.

Embodiment 21. The carrier aggregation device according to embodiment 18, wherein the radio frame comprising the downlink normal sub-frame, the uplink normal sub-frame, and the at least one special sub-frame specifically comprises that:
in a 5ms sub-frame, a ratio of the downlink normal sub-frame, the special sub-frame, and the uplink normal sub-frame is 1:1:3 or 2:1:2 or 3:1:1; or
in a 10ms sub-frame, a ratio of the downlink normal sub-frame, the special sub-frame, and the uplink normal sub-frame is 6:1:3 or 7:1:2 or 8:1:1 or 3:2:5.

Through the above description of the implementation, it is clear to persons skilled in the art that the embodiments of the present invention may be accomplished through hardware, or through software plus a necessary universal hardware platform. Based on this, the technical solutions of the present invention may be embodied in the form of a software product. The software product may be stored in one nonvolatile storage medium (for example, CD-ROM, USB flash drive, or removable hard disk) and include several instructions adapted to instruct computer equipment (for example, a personal computer, a server, or network equipment) to perform the method according to the embodiments of the present invention.

Although the present invention is illustrated and described with reference to some exemplary embodiments, persons of ordinary skill in the art should understand that, various changes in terms of forms and details can be made without departing from the scope of the present invention.

## Claims

1. A carrier aggregation method in a frequency division duplex, FDD, system, comprising:
configuring (301) at least one radio frame of at least one of N carriers to comprise a downlink time slot, an uplink time slot, and a guard period, GP, wherein the GP is located between the downlink time slot and the uplink time slot, and the at least one carrier is referred to as a first carrier;
aggregating (302) the first carrier and an uplink carrier in the N carriers into an uplink carrier when the first carrier is configured as an uplink channel; or
aggregating (302) the first carrier and a downlink carrier in the N carriers into a downlink carrier when the first carrier is configured as a downlink channel,
wherein the N carriers comprise paired carriers and unpaired carriers, or the N carriers only comprise unpaired carriers, and the first carrier is a downlink carrier in the unpaired carriers and/or the paired carriers.

2. The carrier aggregation method according to claim 1, wherein the uplink time slot comprises an uplink normal sub-frame and/or an uplink special sub-frame; and the downlink time slot comprises a downlink normal sub-frame and/or a downlink special sub-frame.

3. The carrier aggregation method according to any one of claims 1 and 2, wherein the radio frame comprising the downlink time slot, the uplink time slot, and the GP is specifically that:
the radio frame comprises a downlink normal sub-frame and at least one special sub-frame; or
the radio frame comprises a downlink normal sub-frame, an uplink normal sub-frame, and at least one special sub-frame; or
the radio frame comprises an uplink normal sub-frame and at least one special sub-frame.

4. The carrier aggregation method according to claim 3, wherein an uplink pilot time slot , UpPTS, in the special sub-frame is used to send a sounding reference symbol SRS, or wherein the uplink time slot in the radio frame is used to send a sounding reference symbol, SRS

5. A carrier aggregation device in a frequency division duplex, FDD, system, comprising:
a configuration unit (71), adapted to configure at least one radio frame of at least one of N carriers to comprise a downlink time slot, an uplink time slot, and a guard period, GP, wherein
the GP is located between the downlink time slot and the uplink time slot, and the at least one carrier is referred to as a first carrier; and
an aggregation unit (72), adapted to aggregate the first carrier and an uplink carrier in the N carriers into an uplink carrier when the first carrier is configured as an uplink channel; or adapted to aggregate the first carrier and a downlink carrier in the N carriers into a downlink carrier when the first carrier is configured as a downlink channel,
wherein the N carriers comprise paired carriers and unpaired carriers, or only comprise unpaired carriers, and the first carrier is selected from a downlink carrier of the unpaired carriers and/or the paired carriers.

6. The carrier aggregation device according to claim 5, wherein the uplink time slot comprises an uplink normal sub-frame and/or an uplink special sub-frame; and the downlink time slot comprises a downlink normal sub-frame and/or a downlink special sub-frame.

7. The carrier aggregation device according to any one of claims 5 and 6, wherein the radio frame comprising the downlink time slot, the uplink time slot, and the GP is specifically that:
the radio frame comprises a downlink normal sub-frame and at least one special sub-frame;
the radio frame comprises a downlink normal sub-frame, an uplink normal sub-frame, and at least one special sub-frame; or
the radio frame comprises an uplink normal sub-frame and at least one special sub-frame.

8. The carrier aggregation device according to claim 7, wherein an uplink pilot time slot (UpPTS) in the special sub-frame is used to send a sounding reference symbol (SRS),or wherein the uplink time slot in the radio frame is used to send an SRS.

9. The carrier aggregation device according to claim 5, 6 or 7, wherein the uplink time slot in the radio frame is used to send an SRS.

10. The carrier aggregation device according to claim 7, wherein the radio frame comprising the downlink normal sub-frame, the uplink normal sub-frame, and the at least one special sub-frame specifically comprises that:
in a 5ms sub-frame, a ratio of the downlink normal sub-frame, the special sub-frame, and the uplink normal sub-frame is 1:1:3 or 2:1:2 or 3:1:1; or
in a 10ms sub-frame, a ratio of the downlink normal sub-frame, the special sub-frame, and the uplink normal sub-frame is 6:1:3 or 7:1:2 or 8:1:1 or 3:2:5.
